# EUROPÄISCHE PATENTSCHRIFT

(11) **EP 0 660 004 B1**
(45) Veröffentlichungstag und Bekanntmachung des Hinweises auf die Patenterteilung: **21.08.1996**
(21) Anmeldenummer: 94119563.8
(22) Anmeldetag: 10.12.1994
(51) Int. Cl.: F16B 33/02

(54) **Befestigungselement mit spannungsoptimiertem Gewindeprofil**
Fastening element with a thread profile for optimizing tensioning
Dispositif de fixation ayant un profil fileté avec tension optimale

(30) Priorität: 13.12.1993 DE 4342415 U
(43) Veröffentlichungstag der Anmeldung: 28.06.1995
(73) Patentinhaber: Härle, Anton, Prof. Dr., D-48161 Münster (DE)
(72) Erfinder: Härle, Anton, Prof. Dr., D-48161 Münster (DE)

(56) Entgegenhaltungen:
- EP-A- 0 321 346
- EP-A- 0 459 960
- US-A- 4 915 559

## Beschreibung

Die Erfindung bezieht sich gemäß dem Oberbegriff auf Befestigungselemente mit einem Gewinde hinsichtlich der Ausgestaltung von konstruktiv bedingten Querschnittsübergängen, die in der Technik als Kerben bezeichnet werden und bei Befestigungselementen im Gewindebereich vorliegen. Insbesondere bezieht sich die Erfindung auf die Ausgestaltung einzelner Gewindeflanken an deren Übergang zum Gewindegrund von außengewindetragenden Kraftübertragungsgliedern, wie Schrauben aller Arten, Gewindestifte, Gewindeeinsätze, Gewindehülsen.

Im Folgenden wird die zugrunde liegende Problematik und das erfinderische Lösungsprinzip anhand verschiedener Schraubengewindeformen an Befestigungselementen abgehandelt. Es kann sich dabei um formschlüssige Schrauben oder andere außengewindetragende Befestigungselemente handeln, die das Innengewinde selbst ausformen und deswegen auch als selbstformende Schrauben bezeichnet werden. Die Erfindung betrifft aber auch Schraubverbindungen der metrischen oder UNC/UNF Reihe und anderer Standards, insbesondere auch Schrauben und außengewindetragende Implantate und Instrumente zur Verwendung am und im Knochen.

Das Festigkeitsverhalten und die Tragfähigkeit von Schrauben ist unter zügigen Belastungen und/oder Schwingungsbeanspruchungen in hohem Maße von der Geometrie der Kerben abhängig. Hier spielt sowohl die Kerbtiefe als auch das am Kerbgrund befindliche Krümmungsprofil eine bedeutende Rolle. Die Kerbtiefe im Sinne der Gewindetiefe ist in hohem Maße von den Materialeigenschaften abhängig, in die eine Schraube eingedreht und verankert wird, und kann somit kaum ohne Veränderung der Haltefunktion modifiziert werden. In direkter Abhängigkeit von der Gewindetiefe steht der Kerndurchmesser, ein weiterer die Tragfähigkeit einer Schraube bestimmender Parameter.

Verallgemeinernd kann man sagen, daß der den Kerbgrund beschreibende Minimalradius in umgekehrtem Verhältnis zur Kerbwirkung steht, d.h. je kleiner der Radius, umso anfälliger ist die Schraube für einen Dauerlastbruch. Die Vergrößerung des Kernradius führt aber zu einer Verringerung der Flankenüberdeckung und damit zur Belastungssteigerung der tragenden Flankenabschnitte.

Die maximalen Spannungskonzentrationen sind dabei nahe dem Gewindegrund, am Beginn des belasteten Flankenanstiegs lokalisiert. Das Phänomen der kerbwirkungsinduzierten Spannungserhöhung tritt in jedem Abschnitt der Querschnittsänderung auf und ist von deren Größe abhängig.

Aus theoretischer Betrachtung sollte daher die Querschnittsänderung am Gewindegrund und Beginn des Flankenanstiegs in Minimalbeträgen erfolgen; dies ist aber mit einer reinen Kreisfunktion der Profilkurve, wie dies bei Befestigungselementen nach dem Stand der Technik am Übergang vom Gewinde zur Gewindeflanke regelmäßig zur Anwendung kommt, nicht befriedigend zu erreichen.

Bei der Belastung von außengewindetragen Befestigungsmittel spielen in erster Linie drei Kräfte eine Rolle, nämlich Zug-, Biege- und Rotationskräfte, wobei letztere nur beim Anziehen und Lösen der Schraubverbindung wirken. Beim Eindrehen von gewindeselbstformenden Schrauben ohne Kernlochborung wird ein wesentlicher Teil des Eindrehwiderstands vom Schraubenschaft hervorgerufen, für den Raum geschaffen werden muß. Die Materialverdrängung hängt damit direkt vom Querschnitt des Schraubenkerns ab. Wenn zur Erreichung eines minimalen Einschraubwiderstands nun der Kerndurchmesser reduziert wird, treten an den Übergängen von Gewindegrund zum Flankenanstieg Spannungskonzentrationen auf, da ja auch das Eindrehen der Gewindeflanken in das Material nur unter Verdrängungsarbeit und einem gewissen Eindrehwiderstand abläuft. Die Rotationsspannungen am Gewindegrund können einerseits durch eine harmonische Querschnittsänderung an dieser Stelle, aber auch durch Erleichterung der Einformung des Gewindes in das Material herabgesetzt werden. Hierauf wirkt sich die Ausgestaltung der Gewindeflanken oberhalb des Flankendurchmessers sehr wesentlich aus. Im Rahmen dieser Offenbarung wird entsprechend der allgemeinen Definition unter Flankendurchmesser verstanden: DER DURCHMESSER DES IMAGINÄREN ZYLINDERS, DER KOAXIAL ZUM GEWINDE LIEGT, UND BEI DEM JEDE BELIEBIGE MANTELLINIE DAS GEWINDEPROFIL SO SCHNEIDET, DAß DIE DURCH GEWINDERILLE UND GEWINDEZAHN GEBILDETEN ABSCHNITTE GLEICH GROß SIND.

Beim Eindrehen einer Schraube in duktilen Kunststoff initiiert die Gewindespitze beim Eindringen in das Material einen Materialfluß in Richtung Gewinderille und dann auch in Richtung Gewindegrund. Der Einformwiderstand ist umso geringer, je weniger das Flankenprofil den Materialfluß hindert. Soweit das Fließverhalten des Materials zur Zeit bekannt ist, bildet sich dabei eine gerundete Außenkontur des verdrängten Materials aus; eine gerade Flankenausgestaltung ist daher weniger geeignet als eine harmonisch konkav gekrümmte Flankenform, die praktisch pflugscharartig das Material in die Gewinderille und hier zum Gewindegrund umlenkt.

Das Festigkeitsverhalten einer formschlüssigen Schraubverbindung wird aber auch wesentlich von der Abscherfestigkeit des Innengewindes im Material bestimmt, wobei der prozentuale Anteil des die Gewinderille anfüllenden Materials in Bezug auf die Abmessungen der Gewinderille eine Rolle spielt. Optimal wäre eine möglichst vollständige Füllung der Gewinderille und Ausbildung einer gewissen Radialspannung, sodaß beim Längszug an der Schraube der Auszugswiderstand nicht nur von dem dem Außendurchmesser der Schraube abhängigen Abscherzylinder bestimmt, sondern mittels der von der Gewindeflanke hervorgerufenen Radialkäfte noch gesteigert wird. Eine gewölbte Ausbildung mit kleinem Teilflankenwinkel der gewindegrundfernen Flankenabschnitte fördet diese Wirkung.

Zwei unterschiedliche Krümmungen im gewindegrundnahen Bereich sind seit rd. 3 Jahrzehnten Stand der Technik bei Verbindungselementen, ohne daß aber bisher diese Ausgestaltung für die Verringerung der Spannungsverhältnisse herangezogen worden wäre.

In EP-A 0321 346 wird erstmals die aus spannungstechnischen Gegebenheiten richtige Anordnung von zwei unterschiedlichen Krümmungen im Gewindegrund dargestellt, aber an keiner Stelle eine ausformulierte oder nachvollziehbar ausgesprochene Offenbarung hinsichtlich der Verbesserung über den Stand der Technik insbesondere nicht in Bezug auf das Erfordernis gemacht, daß die Krümmung im gewindegrundnächsten Segment kleiner als in jedem weiter zur Gewindespitze hin liegenden Segment sein muß.

Der Erfindung liegt daher die Aufgabe zugrunde, die Gewindeflanken so auszugestalten, daß einerseits ein optimaler Auszugswiderstand im Material gegeben ist, zweitens der Einformwiderstand des Gewindes gering gehalten wird und drittens die Querschnittsveränderungen am Gewindegrund/Flankenübergang so ausgeformt sind, daß eine minimale kerbwirkungsbedingte Spannungskonzentration in diesem, besonders Dauerlastbruch gefährdeten Bereich resultiert.

Diese der Erfindung zugrundeliegende Aufgabe wird durch die Lehre des Hauptanspruchs gelöst. Vorteilhafte Ausgestaltungen sind in den Unteransprüchen erläutert.

In anderen Worten wird vorgeschlagen, den Dauerlastbruch gefährdeten Bereich am Übergang des Gewindegrundes zum Flankenanstieg mit einem Krümmungsprofil auszustatten, das einen harmonischen Übergang von einer axial verlaufenden Tangente am Gewindegrund zum einen Winkel mit der Gewindeachse bildenden, nach außen ansteigenden Flankenabschnitt beinhaltet. Dieser harmonische Übergang wird dadurch bewerkstelligt, daß der Krümmungsradius, - der Reziprokwert der Krümmung -, von einem Maximalwert am Gewindegrund kontinuierlich mit zunehmendem Abstand vom Gewindegrundtiefsten bis auf einen Minimalwert im Flankenabschnitt abnimmt. Die Gewindeprofilkurve im Gewindegrund und dem ihm benachbarten Flankenabschnitt kann dabei z.B. durch ein oder mehrere Segment(e) einer oder mehrerer Ellipse(n) beschrieben werden. Eine sehr gute Ausgestaltung einer Gewinderillenhälfte kann auch durch ein Segment einer Funktion ähnlich y=xⁿ mit n zwischen 1,5 und 5, z.B. durch eine kubische Parabel erreicht werden.

Dadurch wird nicht nur die kerbwirkungsinduzierte Spannungskonzentration am Gewindegrund reduziert, gleichzeitig ist auch eine geringere Kerbtiefe möglich, da die für Kreissegmente typische Kernkerbe nun abgeflacht werden kann. Mit dem an der für Dauerlastbrüche kritischen Stelle nun vergrößerten Kernradius kann zusätzlich eine erhebliche Tragfähigkeitsteigerung der Schraube erreicht werden.

Bei Schrauben, die einer starken Biege- oder Scherwirkung ausgesetzt sind, kann der unterschiedlichen Belastung an Last- und Spielflanke dadurch Rechnung getragen werden, daß die Krümmungsänderungen am Übergang des Gewindegrunds zur Lastflanke noch geringer ausgewählt werden als zur Spielflanke. Das Profil der beiden in den Gewindegrund übergehenden Flankenabschnitte wird dann nicht mehr durch eine einheitliche Funktion beschrieben, sondern setzt sich dann z.B. aus zwei unterschiedlichen Ellipsenabschnitten zusammen.

Die Ausgestaltung der Gewindeflanke in ihrer Gesamtheit ist daher vorzugsweise durch ein Profil zu wählen, das von einer minimalen Krümmung am Gewindegrund in Radialrichtung zunächst kontinuierlich zunehmende Krümmungen aufweist und nach einem Krümmungsmaximum sich wieder kontinuierlich zu einem Krümmungsminimum weiterentwickelt. Bei formschlüssigen Schrauben zum Einsatz in Kunststoff, holzartigen Materialien, weichen Metallen und Knochen kann das Krümmungsminimum dabei etwa in Höhe des Flankendurchmessers sein.

Ausführungsbeispiele der erfindungsgemäßen Gewindeprofile für Befestigungselemente werden anhand der Zeichnungen erläutert.

Die Zeichnungen zeigen dabei in:
- Fig. 1: ein Segment einer formschlüssigen Schraube für plastische Materialien mit erfindungsgemäßem Gewindeprofil , in
- Fig. 2: eine Vergrößerung des gewindegrund-nahen Gewindeflankenabschnitts mit erfindungsgemäßem Gewindeprofil, in
- Fig. 3: eine Gewinderille einer Knochenschraube mit erfindungsgemäßen Gewindeprofil, in
- Fig. 4: einen Ausschnitt aus einer ISO-Gewindeverbindung, bei der das erfindungsgemäße Gewindeprofil am Bolzen dargestellt ist, in
- Fig. 5: eine Vergrößerung des Gewindegrunds des Bolzens.

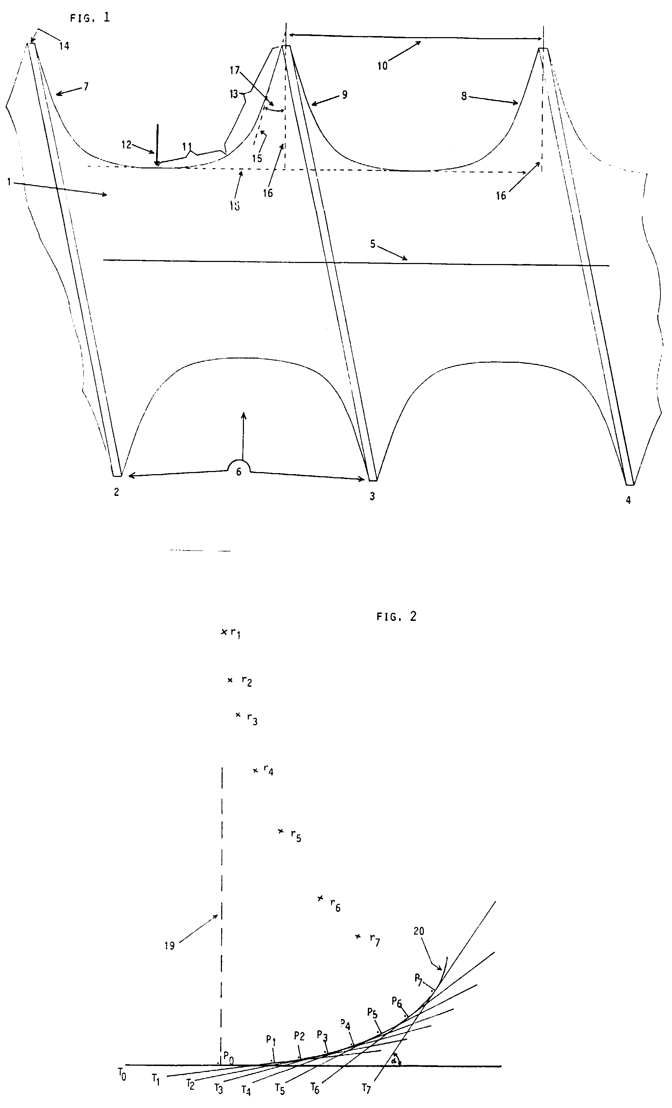

- In Fig.1: ist eine formschlüssige Schraube zur Verwendung bei plastischen Materialien, wie Kunststoffen, Duraplasten, u.s.w. mit erfindungsgemäßem Gewindeprofil dargestellt, die einen Schaft 1, eine Gewindeachse 5 und Gewindeflanken 2/3/4 aufweist. Das Gewindeprofil 6 wird durch den Gewindegrund 12 und die ansteigenden Flanken 8 - 9 gebildet und ist u. anderem durch die Gewindesteigung (h) 10 definiert. Eine die Gewinderille 6 begrenzende Flankenseite besteht aus einem gewindegrund-nahen Segment 11, das im mit einem Pfeil 12 bezeichneten Bereich in den Gewindegrund einmündet und aus einem gewindegrund-fernen Segment 13, das in die Gewindezahnspitze 14 ausläuft. Wird an das Segment 13 vor dem Auslauf in die Gewindespitze eine Tangente 15 angelegt, schließt diese mit der Normalen 16 auf die Gewindeachse den Teilflankenwinkel 17 ein. Eine an den Gewindegrund angelegte Tangente 18 verläuft parallel zur Gewindeachse und definiert den Kerndurchmesser einer Schraube.
Das erfindungsgemäße Gewindeprofil zeichnet sich u.a. am Gewindegrund durch eine Gewindeprofilkurve aus, die eine Vielzahl unterschiedlicher Krümmungen aufweist und durch einen harmonischen Übergang vom Gewindegrund zur Gewindeflanke die kerbwirkungsbedingten Spannungskonzentrationen an dieser Stelle reduziert. Das Lösungsprinzip ist in Fig. 2 vergrößert dargestellt.
- In Fig. 2: ist der Übergang einer ansteigenden Gewindeflanke in den Gewindegrund dargestellt, wobei mit Pₙ₍₀₋₇₎ Berührungspunkte der Tangenten Tₙ₍₀₋₇₎ an die Gewindeprofilkurve 20 bezeichnet sind. Die Tangente T₀ an den Gewindegrund entspricht der Linie 18 in Fig. 1 und verläuft parallel zur Gewindeachse; die unterbrochene Linie 19 stellt eine Normale auf die Tangente T₀ im Gewindegrundtiefsten dar und ist gleichzeitig der Beginn des Gewindeflankenanstiegs.
Die anderen Tangenten T₁₋₇ schließen mit der Gewindeachse einen Winkel alpha ein, der gleichsinnig mit zunehmendem Abstand der Berührungspunkte Pₙ vom Gewindegrundtiefsten P₀ und mit unterschiedlichen Beträgen ansteigt. Mit rₙ₍₁₋₇₎ sind die Mittelpunkte und Beträge der Krümmungsradien dargestellt, die den Kurvensegmenten im Bereich der Tangentenberührungspunkte Pₙ zugeordnet sind. Die Mittelpunkte dieser, die einzelnen Kurvenbogenabschnitte charakterisierenden Krümmungsradien r₁₋₇ verlagern sich gleichsinnig mit den Berührungspunkten P₁₋₇ und die Beträge der Radien verhalten sich umgekehrt zum Abstand der Berührungspunkte P₁₋₇ von P₀.

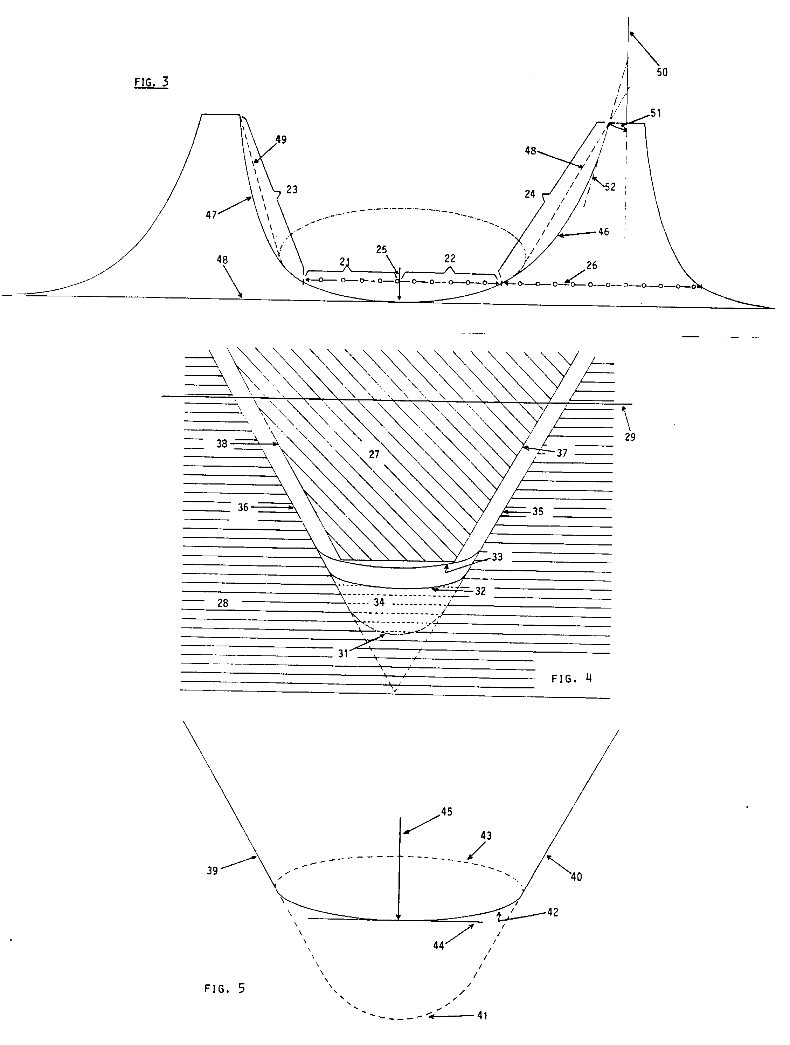

- Fig.3: zeigt das Gewindeprofil einer Knochenschraube, wobei mit 21/22 die gewindegrundnahen, mit 23/24 die gewindegrundfernen Gewindeflankenabschnitte und mit 25 der Gewindegrund bezeichnet sind. Der Flankendurchmesser 26 schneidet das Gewindeprofil so, daß die durch die Gewinderille und den Gewindezahn gebildeten Abschnitte gleich sind und kann näherungsweise als Grenze zwischen den beiden eine Gewindeflanke bildenden Abschnitten dienen.
Die gewindegrundfernen Gewindeflankenabschnitte können entweder gewölbt ausgebildet sein entsprechend der Kurvenlinien 46/47, oder Tangenten an die Gewindeprofilkurve entsprechend der Geraden 48/49 darstellen. Die Tangenten 48/52 an den gekrümmten Verlauf der Gewindeprofilkurve schließen mit der Normalen 50 auf die Gewindeachse den Teilflankenwinkel 51 ein.
- Fig.4: stellt einen Ausschnitt einer ISO-Gewindeverbindung dar, bei der Gewindezahn 27 eines Innengewindes in die Gewinderille eines Bolzens 28 eingreift. Die Linie 29 bezeichnet den gemittelten Flankendurchmesser für diese Gewindeverbindung. Mit 30 ist die in den Bolzenschaft projizierte Spitze des Gewindeprofildreiecks bezeichnet; die für ISO-Außengewinde typische Ausrundung des Gewindegrundes stellt die Kurvenlinie 31 dar. Die ansteigenden Gewindeflanken des Bolzens sind mit 35/36 und die des Innengewindes mit 37/38 bezeichnet. Die erfindungsgemäßen Gewindeprofilkurven in den gewindegrundnahen Abschnitten des Außengewindes sind durch die Kurvenlinien 32 und 33 gekennzeichnet, wobei die Kurvenlinie 32 das Minimalmaß und die Kurvenlinie 33 das Maximalmaß des Schraubenkerndurchmessers darstellt. Der mit punktierten Linienabschnitten herausgestellte Bereich 34 bezeichnet im Schnittbild den durch das erfindungsgemäße Gewindeprofil erreichten Materialgewinn im Gewindegrund, d.h. die Reduzierung der Kerbtiefe.
Durch die erfindungsgemäße Ausgestaltung des Gewindeprofils am Gewindegrund wird also einerseits die vom Krümmungsradius abhängige Kerbwirkungsspannung reduziert und gleichzeitig im für Dauerlastbrüche kritischen Bereich des Gewindegrundes eine Querschnittsvergößerung der Schraube erreicht.
- Fig. 5: stellt die Verhältnisse am Gewindegrund einer ISO-Gewindeschraube dar, wobei 39/40 die ansteigenden Gewindeflanken und 41 mit einer unterbrochenen Kurvenlinie den Gewindegrund entsprechend des Standes der Technik bezeichnet. Die Kurvenlinie 42 bezeichnet die erfindungsgemäße Gewindeprofilkurve im Gewindegrund und anschließenden Gewindeflankenabschnitt, die durch ein Segment einer Ellipse gebildet wird, wobei der Ellipsenteil 43, der nicht zur Gewindeprofilkurve gehört, unterbrochen gezeichnet ist. Die Gerade 45 stellt eine Normale auf eine Tangente 44 an die Gewindeprofilkurve im Gewindegrundtiefsten dar und weist mit der Pfeilspitze auf den Massenzugewinn im Gewindegrund des erfindungsgemäßen Gewindes im Vergleich zum ISO-Gewinde entsprechend dem Stand der Technik hin.

Während in den Fig. Ausgestaltungen mit Außengewinde dargestellt und erläutert sind, können die erfindungsgemäßen Gewindeprofile in gleicher Weise auch bei Innengewinden zur Anwendung kommen, wobei hier insbesondere die erfindungsgemäße Profilierung am Gewindegrund vorteilhaft ist.

Die Erfindung bezieht sich auch auf das Verfahren zur Gewindeherstellung und damit weiterhin auf ein Werkzeug zur Herstellung des Gewindes, wobei es sich um spanend oder spanlos wirkende Werkzeuge, die zumindest in einem Teil des gewindeerzeugenden Abschnitts eine zum Gewindeprofil kongruente Oberflächenform aufweisen, oder um Verfahren handelt, mittels derer Werkzeuge durch eine dreidimensionale Auslenkung das Gewindeprofil herzustellen vermögen.

Die Erfindung wurde in bildhafter Weise dargestellt, und die verwendete Terminologie ist im Sinne der wörtlichen Beschreibung nicht aber im Sinne einer Limitierung zu verstehen.

Es ist offenkundig, daß viele Modifikationen und Variationen der Erfindung im Lichte der erfindungsgemäßen Lehre möglich sind. Die Bezugshinweise in den folgenden Abbildungen und Ansprüchen dienen nur dem besseren Verständnis und sind nicht in irgendeiner Weise als Einschränkung der Erfindung auf die konkret dargestellte Ausbildung zu verstehen, vielmehr kann die Erfindung auch in anderer Weise als dargestellt angewandt werden.

## Patentansprüche

1. Befestigungselement mit einem Gewinde, dessen Gewindeprofil eine Gewindeachse (5) umschreibt und eine Gewindesteigung h (10), einen Gewindegrund (12), nach beiden Seiten anschliessende Gewindeflanken (8;9), die der Flankendurchmesser (26;29) in einen ersten, gewindegrundnahen Abschnitt (11;21;22) und einen zweiten, gewindegrundfernen Abschnitt (13;23;24) unterteilt, und in jedem gewindegrundfernen Abschnitt zumindest im gewindespitzennahen Bereich einen Teilflankenwinkel (17;51) kleiner 40° aufweist, dadurch gekennzeichnet, daß das Gewindeprofil im gewindegrundnahen Bereich, der sich aus zwei ersten Abschnitten (11;21;22) zusammensetzt, eine Kurve mit mindestens vier unterschiedlichen Krümmungen beschreibt, wobei zumindest einer der beiden ersten Abschnitte mindestens drei unterschiedliche Krümmungen aufweist.

2. Befestigungselement nach Anspruch 1 dadurch gekennzeichnet, daß das Gewindeprofil im gewindegrundnahen Bereich eine Kurve mit mindestens fünf unterschiedlichen Krümmungen beschreibt.

3. Befestigungselement nach Anspruch 1 oder 2 dadurch gekennzeichnet, daß der Krümmungsradius rₘₐₓ am Übergang vom Gewindegrund (12) zur ansteigenden Gewindeflanke größer als 0,25 h ist.

4. Befestigungselement nach einem oder mehreren der vorangehenden Ansprüche dadurch gekennzeichnet, daß der Krümmungsradius rₘₐₓ am Übergang vom Gewindegrund (12) zur ansteigenden Gewindeflanke größer als 0,5 h ist.

5. Befestigungselement nach einem oder mehreren der vorangehenden Ansprüche dadurch gekennzeichnet, daß das Gewindeprofil im ersten und/oder zweiten Abschnitt eine Kurve mit kontinuierlicher Krümmungsänderung darstellt

6. Befestigungselement nach einem oder mehreren der vorangehenden Ansprüche dadurch gekennzeichnet, daß das Gewindeprofil im Gewindegrund (12) keine Krümmung aufweist.

7. Befestigungselement nach einem oder mehreren der vorangehenden Ansprüche dadurch gekennzeichnet, daß das Gewindeprofil im ersten Abschnitt (11; 21; 22) zumindest im unmittelbar an den Gewindegrund anschließenden Bereich mit zunehmendem axialen Abstand vom Gewindegrundtiefsten auch zunehmende Krümmungen aufweist, und der von den Berührungstangenten Tₙ₍₁₋₇₎ an die Gewindeprofilkurve mit der Achse eingeschlossene Winkel alpha gleichsinnig mit dem axialen Abstand der Berührungspunkte Pₙ₍₁₋₇₎ vom Gewindegrundtiefsten P₀ ansteigt.

8. Befestigungselement nach Anspruch 7 dadurch gekennzeichnet, daß der Winkel alpha im Bereich von 0 bis 85° liegt.

9. Befestigungselement nach einem oder mehreren der vorangehenden Ansprüche, dadurch gekennzeichnet, daß die Gewindeprofilkurve ein oder mehrere Segment(e) einer Kurve zweiter oder höherer Ordnung beinhaltet.

10. Befestigungselement nach Anspruch 9 dadurch gekennzeichnet, daß die Gewindeprofilkurve ein oder mehrere Segment(e) einer oder verschiedener Ellipse(n) beinhaltet.

11. Befestigungselement nach Anspruch 10 dadurch gekennzeichnet, daß der Quotient a/b aus Hauptachse (a) und Nebenachse (b) der Ellipsensegmente im Bereich von 1,5 bis 15, vorzugsweise um 3 liegt.

12. Befestigungselement nach einem oder mehreren der vorangehenden Ansprüche, dadurch gekennzeichnet, daß die Gewindeprofilkurve ein oder mehrere Segment(e) einer oder verschiedener Kurvenfunktion der Gleichung y=xⁿ beinhaltet, wobei n zwischen 1,5 und 5, vorzugsweise um 3 liegt.

13. Befestigungselement nach einem oder mehreren der vorangehenden Ansprüche, dadurch gekennzeichnet, daß die beidseitigen ersten, d.h. an den Gewindegrund anschließenden Flankenabschnitte (21; 22 ) unterschiedlich ausgebildet sind.

14. Befestigungselement nach einem oder mehreren der vorangehenden Ansprüche, dadurch gekennzeichnet, daß der zweite, d.h. gewindegrundferne Flankenabschnitt (13) konkav ausgebildet ist.

15. Befestigungselement nach einem oder mehreren der vorangehenden Ansprüche, dadurch gekennzeichnet, daß die beiden gewindegrundfernen Flankenabschnitte (23; 24) unterschiedlich ausgebildet sind.

16. Befestigungselement nach einem oder mehreren der vorangehenden Ansprüche, dadurch gekennzeichnet, daß es sich bei dem Gewinde um ein Außengewinde handelt.

17. Befestigungselement nach einem oder mehreren der vorangehenden Ansprüche, dadurch gekennzeichnet, daß es sich bei dem Gewinde um ein Innengewinde handelt.

18. Befestigungselement nach einem oder mehreren der vorangehenden Ansprüche, dadurch gekennzeichnet, daß das Gewindeprofil auf Kraftübertragungsgliedern für Osteosynthesearbeiten, wie Knochenschrauben, Schraubpfannen, Gewindeschneider ausgebildet ist.

19. Befestigungselement nach einem oder mehreren der vorangehenden Ansprüche, dadurch gekennzeichnet, daß das Gewindeprofil in/auf Muttern, Schrauben, Gewindeeinsätzen, Gewindehülsen, Schraubeinsätzen ausgebildet ist.

20. Werkzeug zur Herstellung eines Gewindeprofils nach einem oder mehreren der vorangehenden Ansprüche dadurch gekennzeichnet, daß das Werkzeug selbst ein zum Gewindeprofil komplementäres Oberflächenprofil beinhaltet oder das Gewindeprofil durch entsprechende räumliche Auslenkung erzeugt.

## Claims

1. A fastening element with a thread, the thread profile of which describes a thread axis (5) and a thread pitch h (10), a thread root (12), thread flanks (8;9) adjoining on both sides, which the flank diameter (26;29) divides into a first portion (11;21;22) close to the thread root and a second portion (13;23;24) remote from the thread root, a flank reference angle (17;51) smaller than 40° being formed in each portion remote from the thread root at least in the region close to the thread apex,
characterised in that the thread profile in the region close to the thread root, which is composed of two first portions (11;21;22), describes a curve exhibiting at least four different curvatures, at least one of the first two portions exhibiting at least three different curvatures.

2. A fastening element according to claim 1, characterised in that the thread profile in the region close to the thread root describes a curve exhibiting at least five different curvatures.

3. A fastening element according to claim 1 or claim 2, characterised in that the radius of curvature rₘₐₓ at the point of transition from thread root (12) to ascending thread flank is greater than 0.25 h.

4. A fastening element according to any one of the preceding claims, characterised in that the radius of curvature rₘₐₓ at the point of transition from thread root (12) to ascending thread flank is greater than 0.5 h.

5. A fastening element according to any one of the preceding claims, characterised in that the thread profile in the first and/or second portions represents a curve with continuous curvature modification.

6. A fastening element according to any one of the preceding claims, characterised in that the thread profile does not exhibit any curvature at the thread root (12).

7. A fastening element according to any one of the preceding claims, characterised in that the thread profile in the first portion (11;21;22) exhibits curvature which, at least in the region directly adjoining the thread root, increases as the axial distance from the deepest point of the thread root increases, and in that the angle alpha formed by the contact tangents Tₙ₍₁₋₇₎ to the thread profile curve and the axis increases in the same way as the axial distance between the contact points Pₙ₍₁₋₇₎ and the deepest point of the thread root P₀.

8. A fastening element according to claim 7, characterised in that the angle alpha lies in the range between 0 and 85°.

9. A fastening element according to any one of the preceding claims, characterised in that the thread profile curve includes one or more segment(s) of a curve of the second or higher order.

10. A fastening element according to claim 9, characterised in that the thread profile curve includes one or more segment(s) of one or more ellipse(s).

11. A fastening element according to claim 10, characterised in that the quotient a/b of the main axis (a) and the secondary axis (b) of the ellipse segments lies in the range between 1.5 and 15, and is preferably 3.

12. A fastening element according to any of the preceding claims, characterised in that the thread profile curve includes one or more segment(s) of one or more curve functions of the equation y=xⁿ, n being between 1.5 and 5 and preferably 3.

13. A fastening element according to any one of the preceding claims, characterised in that the first flank portions (21;22) on both sides, i.e. those adjoining the thread root, differ in construction.

14. A fastening element according to any one of the preceding claims, characterised in that the second flank portion (13), i.e. that remote from the thread root, is of concave construction.

15. A fastening element according to any one of the preceding claims, characterised in that the two flank portions (23;24) remote from the thread root differ in construction.

16. A fastening element according to any one of the preceding claims, characterised in that the thread is an external thread.

17. A fastening element according to any one of the preceding claims, characterised in that the thread is an internal thread.

18. A fastening element according to any one of the preceding claims, characterised in that the thread profile is formed on power transmission members for osteosynthesis purposes, such as bone screws, screw sockets and thread cutters.

19. A fastening element according to any one of the preceding claims, characterised in that the thread profile is formed in/on nuts, screws, thread inserts, threaded bushes and screw plugs.

20. A tool for producing a thread profile according to any one of the preceding claims, characterised in that the tool itself comprises a surface profile complementary to the thread profile or generates the thread profile by corresponding spacial displacement.

## Revendications

1. Dispositif de fixation comportant un filetage, dont le profil fileté circonscrit un axe de filetage (5) et qui présente un pas de filetage h (10), un fond de filet (12), des flancs de filet se prolongeant des deux côtés (8;9), qui subdivisent le diamètre sur flanc (26;29) en une première section proche du fond de filet (11;21;22) et en une seconde section éloignée du fond de filet (13;23;24), et présente dans chaque section éloignée du fond de filet tout au moins dans la zone proche du sommet du filet un pas angulaire (17;51) inférieur à 40°,
caractérisé en ce que le profil fileté dans la zone proche du fond de filet, qui se compose de deux premières sections (11;21;22), trace une courbe ayant au moins quatre courbures différentes, où tout au moins une des deux premières sections présente au moins trois courbures différentes.

2. Dispositif de fixation selon la revendication 1 caractérisé en ce que le profil fileté dans la zone proche du fond de filet trace une courbe ayant au moins cinq courbures différentes.

3. Dispositif de fixation selon la revendication 1 ou la revendication 2 caractérisé en ce que le rayon de courbure rₘₐₓ à la transition du fond de filet (12) au flanc de filet montant est supérieur à 0,25 h.

4. Dispositif de fixation selon une ou plusieurs des revendications précédentes caractérisé en ce que le rayon de courbure rₘₐₓ à la transition du fond de filet (12) au flanc de filet montant est supérieur à 0,5 h.

5. Dispositif de fixation selon une ou plusieurs des revendications précédentes caractérisé en ce que le profil fileté dans la première section et/ou dans la seconde section représente une courbe à courbures continuellement modifiées.

6. Dispositif de fixation selon une ou plusieurs des revendications précédentes caractérisé en ce que le profil fileté au fond du filet (12) ne présente aucune courbure.

7. Dispositif de fixation selon une ou plusieurs des revendications précédentes caractérisé en ce que le profil fileté dans la première section (11;21;22) au moins dans la zone directement adjacente au fond de filet présente aussi des courbures croissantes selon une distance axiale croissante par rapport au point le plus profond du fond de filet et en ce que l'angle alpha, compris entre les tangentes de contact T_{n (1-7)} de la courbe de profil fileté et l'axe, subit une croissance équivalente à l'augmentation de la distance axiale des points de contact Pₙ₍₁₋₇₎ par rapport au point le plus profond du fond de filet P₀.

8. Dispositif de fixation selon la revendication 7 caractérisé en ce que l'angle alpha se trouve entre 0 et 85°.

9. Dispositif de fixation selon une ou plusieurs des revendications précédentes caractérisé en ce que la courbe de profil fileté contient un ou plusieurs segment(s) d'une courbe de deuxième degré ou de degré supérieur.

10. Dispositif de fixation selon la revendication 9 caractérisé en ce que la courbe de profil fileté contient un ou plusieurs segment(s) d'une ou de diverses ellipse(s).

11. Dispositif de fixation selon la revendication 10 caractérisé en ce que le quotient a/b de l'axe principal (a) et du second axe (b) des segments elliptiques se trouve dans une plage de 1,5 à 15, de préférence autour de 3.

12. Dispositif de fixation selon une ou plusieurs des revendications précédentes, caractérisé en ce que la courbe de profil fileté contient un ou plusieurs segment(s) d'une ou de diverses fonctions de courbe de l'équation y=xⁿ, où n se situe entre 1,5 et 5, de préférence autour de 3.

13. Dispositif de fixation selon une ou plusieurs des revendications précédentes, caractérisé en ce que les premières sections de flancs des deux côtés, c-à-d. adjacentes au fond de filet (21;22) sont formées différemment.

14. Dispositif de fixation selon une ou plusieurs des revendications précédentes, caractérisé en ce que la seconde section de flanc (13) c-à-d. la section éloignée du fond de filet est de formation concave.

15. Dispositif de fixation selon une ou plusieurs des revendications précédentes, caractérisé en ce que les deux sections de flanc éloignées du fond de filet (23; 24) sont formées différemment.

16. Dispositif de fixation selon une ou plusieurs des revendications précédentes, caractérisé en ce qu'il s'agit pour le filetage d'un filetage mâle.

17. Dispositif de fixation selon une ou plusieurs des revendications précédentes, caractérisé en ce qu'il s'agit pour le filetage d'un filetage femelle.

18. Dispositif de fixation selon une ou plusieurs des revendications précédentes, caractérisé en ce que le profil fileté est façonné sur des éléments de transmission pour des travaux d'ostéosynthèse, comme vis à os, poches de vissage, outils à fileter.

19. Dispositif de fixation selon une ou plusieurs des revendications précédentes, caractérisé en ce que le profil fileté est façonné dans/sur des boulons, vis, broches filetées, douilles filetées, embouts de vissage.

20. Outil de fabrication d'un profil fileté selon une ou plusieurs des revendications précédentes, caractérisé en ce que l'outil même comporte un profil superficiel complémentaire du profil fileté ou en ce qu'il produit le profil fileté par une déviation spatiale correspondante.
